Europäisches Patentamt

European Patent Office

Office européen des brevets

(19)

(11) Publication number: **0 087 289**

**A2**

(12)

# EUROPEAN PATENT APPLICATION

(21) Application number: **83300853.5**

(22) Date of filing: **18.02.83**

(51) Int. Cl.³: **F 16 G 15/04**

(30) Priority: **23.02.82 GB 8205318**

(43) Date of publication of application:
**31.08.83 Bulletin 83/35**

(84) Designated Contracting States:
**DE FR GB IT NL SE**

(71) Applicant: **LEWMAR MARINE LIMITED**
**Southmoor Lane**
**Havant, Hampshire PO9 1JJ(GB)**

(72) Inventor: **Bale, Richard Martin**
**39 St. Thomas Avenue**
**West Town Hayling Island Hants. PO11 0ET(GB)**

(74) Representative: **Harrison, David Christopher et al,**
**MEWBURN ELLIS & CO 2/3 Cursitor Street**
**London EC4A 1BQ(GB)**

(54) Shackle.

(57) A snap-closing shackle has a catch (10) which moves in a straight-line motion to release a latch (20). The catch is guided by its stem (8) running in a bearing orifice (7) in the body of the shackle. The catch may be operated by a trigger-like extension (11) available through a window (6) in the body of a shackle and/or by a lanyard attached to an extension (17) of the stem. The axle (21) of the latch arm (20) is offset from the centre-line (22) of the shackle, and the foot of the latch is made with a planar sole (25) and an upwardly inclined surface (24) which abuts and wedges against an abutment surface (28) fast with the body of the shackle.

Fig 1.

EP 0 087 289 A2

## SHACKLE

This invention relates to shackles which are used for releasably securing one member to another.

We are concerned with shackles of a type which are self-locking when a latch is closed onto the body of the shackle. This is a type which has become known as snap shackles (see U.S. Patents 3 930 290 and 4 093 293 for example).

These shackles are used especially in marine sports such as yachting and it has become important to develop a capacity for automatic self-latching which is entirely secure but is easily released when necessary.

The present invention allows for the release of the latch when a catch is moved by the user in a straight-line motion. The straight-line motion is resisted by a biassing spring urging the catch towards a position in which it will hold the latch shut, so that when the latch is pressed closed, it will snap against and be held by the returning catch. In this design, the strength of the spring can be as great as necessary.

This straight-line motion is conveniently actuated by forming a part associated with the catch like a trigger allowing it to be exposed for use through an aperture in the shackle. This is analogous to the exposure of a trigger in a trigger-guard, and has been seen per se in U.S. 3 930 290. But the present invention in using straight-line motion very much simplifies the catching action on the latch. It also effectively resists any tendency for the catch to jump open as a result of inertia when the shackle is subjected to violent sideways load, as when a sail is flapping.

The design of the shackle can be such that the latch has a foot with a toe part not only having an action in displacing the catch upon closure of the latch but also an action in anchoring itself beneath a recessed part of a body of the shackle when the latch is in the closed position, thereby to resist opening and distorting strains on the closed shackle. Furthermore, and also as a consequence of the straight-line motion of the catch, the pivot axis upon which the latch part pivots relative to the body of the shackle as a whole may be displaced from the axial centre line of the shackle, to give thereby the possibility of the part of the latch which strikes the catch being planar and therefore simpler to make, while still having the necessary components of motion in two directions which will at the same time allow it to displace the catch and allow it to have its abutting function against the body.

A particular embodiment of the invention will now be described with reference to the accompanying drawings wherein:

Figure 1 is a section through the median plane of the shackle; and

Figure 2 is a side view of the shackle.

The shackle has a body 1 one part of which is extended as a curved arm 2 which at its end remote from the body splits to form lugs 3 separated by a channel. (The centre plane of the channel is in the plane of the drawing).

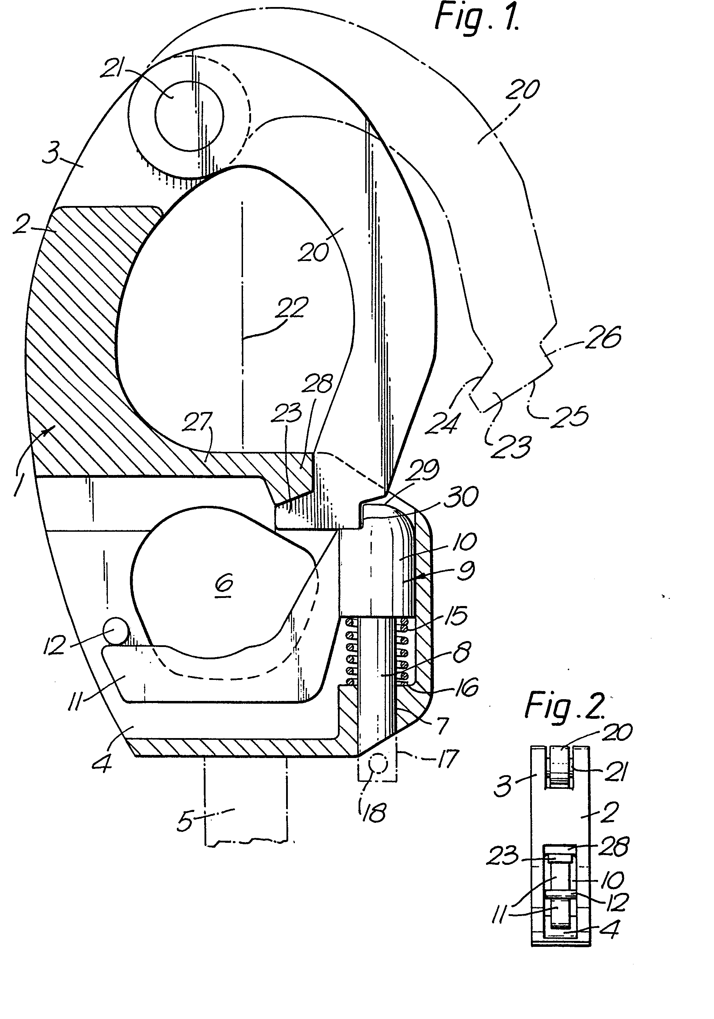

At its other end, the body has a central gap 4 also centred on the plane of the paper, and from its rear end extends a securing post 5 by which the shackle may be secured to a fixed or other anchor point. Through the walls of the body which define the channel 4 there is penetrated large aperture 6, and there is a cylindrical bearing orifice 7 for receiving a cylindrical stem 8 of a catch element 9 with the head 10 of which is associated a blade 11 shaped like a trigger and part of which normally partially obscures the aperture 6. Registering holes 12 in the walls defining the channel 4 are for receiving a stop pin or bolt 13 (Figure 2), against which the end of the trigger 11 abuts to prevent the catch 9 as a whole escaping from the body. A spring 15 is entrapped between the head 10 of the catch element 9 and a shelf 16 surrounding one end of the bearing 7 so as resiliently to urge the catch upwardly as seen in the drawing. The stem 8 may be continued rearwardly as shown in dotted lines 17 to project out of the body, and this projecting part may have a comparatively wide aperture 18 for the reception of a lanyard. It can be seen that the catch 9 can be depressed towards the bottom of the body, to release the latch and allow it to open, by a finger inserted through the aperture 6 and squeezing on the trigger or by direct pull on a lanyard attached to an extended part 17 of the stem. In either case the motion of the catch will be straight-line, guided by the stem 8 in the sliding bearing 7.

To form the closure of the shackle together with the arm 2 there is a latch arm 20 which may either be held closed to the body (as seen in heavy lines of the drawing) or allowed to pivot open as seen in the feint lines, so as to respectively entrap or allow the release of a rope, an eyelet or the like. For this purpose it is pivoted on a stout axle 21 held between the lugs 3 of the arm 2, this axle being eccentric of the centre line 22 of the shackle as a whole and upon which centre line the post 5 lies. At its free end, the latch 20 has a foot with a forwardly projecting toe 23 with an upwardly sloped upper surface 24, and a flat undersurface 25. At the heel there is an inlet notch 26.

The upper edge of the channel 4 in the body is defined by a solid wall 27. One end 28 of that wall is shaped to correspond to the shape of the toe 23 and surface 24 of the foot of the latch arm 20, to act as a block and provide support under load for that arm.

As the latch arm is brought from the open position shown in the feint lines to the closed position, the flat undersurface 25 of the foot strikes against and depresses the flattened uppersurface 29 of the head 10 of the catch 9, the direction of this movement being appropriate for that action by virtue of the displacing of the axis of pivot of the arm 20 from the centre line 22 of the shackle as a whole. When the inlet 26 is in register with a corresponding counterpart inlet 30 in the head 10, the catch 9 is free to move upwardly and by abutment between those inlets to retain the arm 20 in the closed position. At this stage, the toe part 23,24 of the arm 20 is securely engaged with and indeed may be in a wedging action with the shaped part 28 of the wall 27 so that the shackle is held securely closed and opening or distorting pressures are taken primarily by the block rather than by the catch. For this reason also there should be little frictional or reactional resistance when the user wishes to open the shackle by depressing the trigger 11 (or by pulling on the lanyard, if fitted), so as to cause straight-line motion of the catch in its bearing.

CLAIMS:

1. A shackle which is self-locking by means of a releasable catch (10) when a latch (20) is closed onto the body (1) of the shackle characterised in that the catch (10) is movable in a straight line motion to release the latch (20).

2. A shackle according to Claim 1, wherein the latch (20) is pivotable about an axle (21) offset from the centre line (22) of the shackle one side of the catch (10) being offset from the centre line (22) to the opposite side, the straight line motion of the catch (10) being parallel to the centre line (22).

3. A shackle according to Claim 2, wherein the latch (20) has a foot with a planar sole (25) to strike against a top face (29) of the catch (10) and depress the catch (10) as the latch (20) closes.

4. A shackle according to any one of the preceding Claims, wherein the body has a through-aperture (6) which is partially obstructed by an extension (11) of the catch (10) whereby motion of the catch may be caused by moving the extension (11) across the aperture (6).

5.     A shackle according to any one of the preceding Claims, wherein the catch has a stem portion (17) extending from the body (1) of the shackle and having means (18) for the attachment of a lanyard for exerting a straight-line pull on the catch.

6.     A shackle according to any one of the preceding Claims, wherein the latch (20) has a foot with a toe (23) projecting forwardly in the direction of closing of the latch  and having a surface (24) snugly engaged in the closed position of the latch with an abutment surface (28) of the body (1) of the shackle.

7.     A shackle according to Claim 6, wherein the surface (24) is planar and is angled such as to have an increasing wedging action with the abutment surface (28) as the latch (20) arrives at its closed position.

8.     A shackle according to any one of the preceding Claims, wherein the catch (20) includes a stem (8) slidably borne in cylindrical bearing orifice (7) in the body, and a spring (15) surrounds part of the stem to urge the catch towards a position retaining the latch in the closed position.

0087289

1/1

Fig. 1.

Fig. 2.